# EUROPEAN PATENT APPLICATION

(11) **EP 2 268 094 A1**
(43) Date of publication of application: **29.12.2010**
(21) Application number: 08873814.1
(22) Date of filing: 15.12.2008
(51) Int. Cl.: H04W 76/06

(54) **SESSION TERMINATION TRIGGERING METHOD, IMPLEMENTING METHOD AND APPARATUS**

(30) Priority: 11.04.2008 CN 200810091055
(71) Applicant: ZTE Corporation, Shenzhen, Guangdong 518057 (CN)
(72) Inventor: ZHOU, Xiaoyun, Guangdong 518057 (CN); ZONG, Zaifeng, Guangdong 518057 (CN); RUI, Tong, Guangdong 518057 (CN)
(74) Representative: Ilgart, Jean-Christophe
(86) International application number: PCT/CN2008/073513
(87) International publication number: WO 2009/124441

(57) **Abstract**

The present invention discloses a session termination triggering method, an implementing method and a system, wherein the session termination triggering method comprises: a policy control and charging rules function entity (PCRF) detects that the policy control session between the PCRF and a policy and charging enforcement function entity (PCEF) shall be terminated; the PCRF sends a first request message to the PCEF, and carries the session identifier of the policy control session and the session termination indicator for indicating to terminate the policy control session in the first request message; in response to the first request message, the PCEF removes/deactivates the policy and charging control rules related to the policy control session according to the session termination indicator.

## Description

### Filed of the Invention

The present invention relates to the communication field, in particular to a triggering and implementing method and system for terminating a session in the packet system of the 3rd Generation Partnership Project (3GPP).

### Background of the Invention

In the standard system of the 3GPP Release 7, the policy and charging functions is realized by a Policy and Charging Control (PCC) architecture. The PCC architecture is a function architecture which can be used in a plurality of access technologies, for example, the PCC architecture can be used in the UMTS Terrestrial Radio Access Network (UTRAN) of the Universal Mobile Telecommunications System (UMTS), the Global System for Mobile Communication (GSM)/Enhanced Data Rate for GSM Evolution (EDGE) radio access network, and the Interworking Wireless Local Area Network (I-WLAN) and so on.

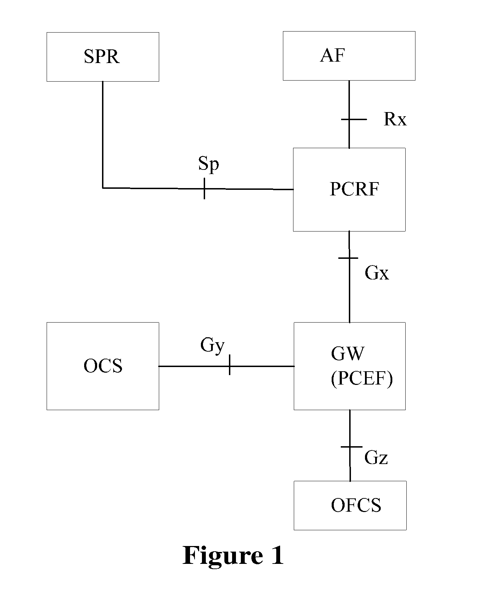

The PCC mainly realizes two functions: policy control function and charging function. Fig.1 is an overall frame diagram of the PCC. Each logic function entity and the interface function of the PCC architecture shown in Fig.1 will be described hereafter.

An application function (AF) entity provides an access points for service application and dynamic policy control need to be performed for the network resource used by the service application. During a parameter negotiation on a service plane, the AF entity transmits the related service information to a Policy and Charging Rules Function (PCRF) entity. If the service information is consistent with the policy of the PCRF, the PCRF will accept the negotiation; otherwise, the PCRF will refuse the negotiation, and provide acceptable service parameters of the PCRF in the feedback at the same time. Then, the AF entity feeds back the parameters to the user equipment (UE). Wherein, the interface between the AF and the PCRF is an Rx interface.

As the core of the PCC, the PCRF entity is responsible for constituting the policy decisions and charging rules. The PCRF provides the rules of network control based on service data flow, and the network control comprises: the detection of the service data flow, gating control, quality of service (QoS) control, and the charging rules based on the data flow and so on. The PCRF sends the policy and charging rules constituted by the PCRF to a PCEF for execution. At the same time, the PCRF also needs to ensure that the rules are consistent with the subscription information of the user. The basis for the PCRF to constitute the policy and charging rules comprises: obtaining information related with the service from the AF; obtaining information related with the policy charging control subscription of user from the subscription profile repository (SPR), and obtaining the information of the network related to the bearer from the PCEF.

A policy and charging enforcement function (PCEF) entity generally is located in a gateway (GW), and executes the policy and charging rules constituted by the PCRF on a bearer plane. The PCEF detects the service data flow according to the service data flow filter in the rules sent by the PCRF, and executes the policy and charging rules constituted by the PCRF on the service data flow. When the bearer is established, the PCEF performs QoS authorization according to the rules sent by the PCRF, and performs gating control according to the execution situation of the AF. According to the charging rules sent by the PCRF, the PCEF executes corresponding service data flow charging operation, wherein the charging can be online charging or offline charging. If the charging is online charging, the PCEF needs to perform the credit management together with an online charging system (OCS). If the charging is offline charging, the PCEF exchanges related charging information with an offline charging system (OFCS). The interface between the PCEF and the PCRF is a Gx interface; the interface between the PCEF and the OCS is a Gy interface; and the interface between the PCEF and the OFCS is a Gz interface. The PCEF generally is located on the gateway of the network, e.g. the gateway GPRS support node (GGSN) in the GPRS, and the packet data gateway (PDG) in the I-WLAN.

A subscription profile repository (SPR) stores the user policy charging control subscription information related to policy control and charging. The interface between the SPR and the PCRF is an Sp interface.

An online charging system (OCS) performs user credit control and management together with the PCEF in an online charging mode.

An offline charging system (OFCS) completes the charging operation together with the PCEF in an offline charging mode.

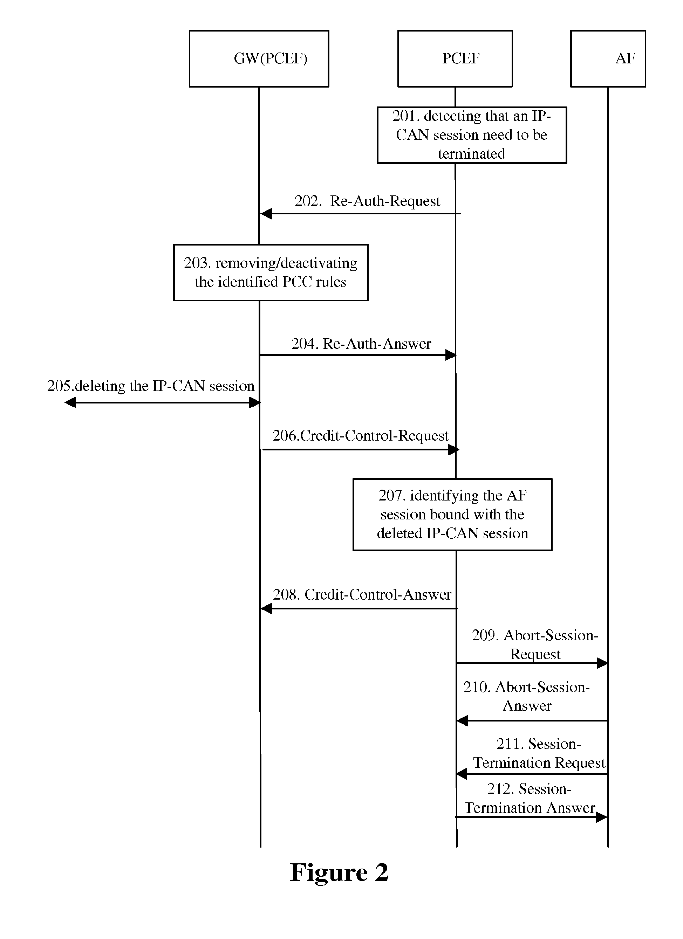

Fig.2 shows a termination flow of an IP-CAN session initiated by the PCRF. Through the flow, the PCC rules related to the IP-CAN session on the PCEF and the PCRF will be deleted and deactivated. As shown in Fig.2, the termination flow comprises the steps as follows (step 201-step 212):
step 201, the PCRF detects that an IP-CAN session need to be terminated;
step 202, the PCRF sends a Diameter RAR (Re-Auth-Request) message to the GW to request for removing the PCC rules, wherein the Diameter RAR message carries all the identifiers of the PCC rules installed and activated by the PCRF for the IP-CAN session before;
step 203, the GW removes the PCC rules identified in the Diameter RAR message;
step 204, the GW sends a Diameter RAA (Re-Auth-Answer) message to the PCRF for confirmation;
step 205, when the GW does not have any PCC rules applied for the IP-CAN session, the PCEF will use a specific flow to delete the IP-CAN session;
step 206, the GW sends a Diameter CCR (Credit-Control-Request) message to the PCRF to indicate to terminate the IP-CAN session. The value of the CC-Request-Type AVP (Attribute Value Pair) in the Diameter CCR message is set as TERMINATION_REQUEST which is used for identifying the termination of the session;
step 207, the PCRF identifies the AF session bound with the deleted IP-CAN session;
step 208, the PCRF sends a Diameter CCA (Credit-Control-Answer) message to the GW for confirmation;
step 209, the PCRF sends a Diameter ASR (Abort-Session-Request) message to the AF to indicate to terminate the session;
step 210, the AF sends a Diameter ASA (Abort-Session-Answer) message to the PCRF for confirmation;
step 211, the AF sends a Diameter STR (Session-Termination Request) message to the PCRF to indicate that the session has been terminated;
step 212, the PCRFA sends a Diameter STA (Session-Termination Answer) message to the AF for confirmation.

Generally, the PCC rules comprise: dynamic PCC rule and predefined PCC rule, wherein the dynamic rule is provided by the PCRF for the PCEF through the Gx interface, and is predefined or is generated dynamically in the PCRF; the predefined PCC rule is predefined in the PCEF, and is generally divided into two categories: one is the predefined PCC rule which is known by the PCRF, the other is the predefined PCC rule which is unknown by the PCRF. For the predefined PCC rule which is known by the PCRF in the PCEF, the PCRF can activate or deactivate the PCC rule by providing the identifier corresponding to the PCC rule; the PCRF can not control the predefined PCC rule which is unknown by the PCRF in the PCEF, since the PCEF can activate or deactivate by itself. Therefore, in Fig.2, if the activated PCC rule which is unknown by the PCRF and predefined by the PCEF of the IP-CAN session in the PCEF is required to terminated, so it is impossible for the message in step 202 to carry the identifier corresponding to such kind of PCC rule, thus it is also impossible for the PCEF to delete such kind of PCC rule in step 203 and the flows after step 205 cannot be executed either.

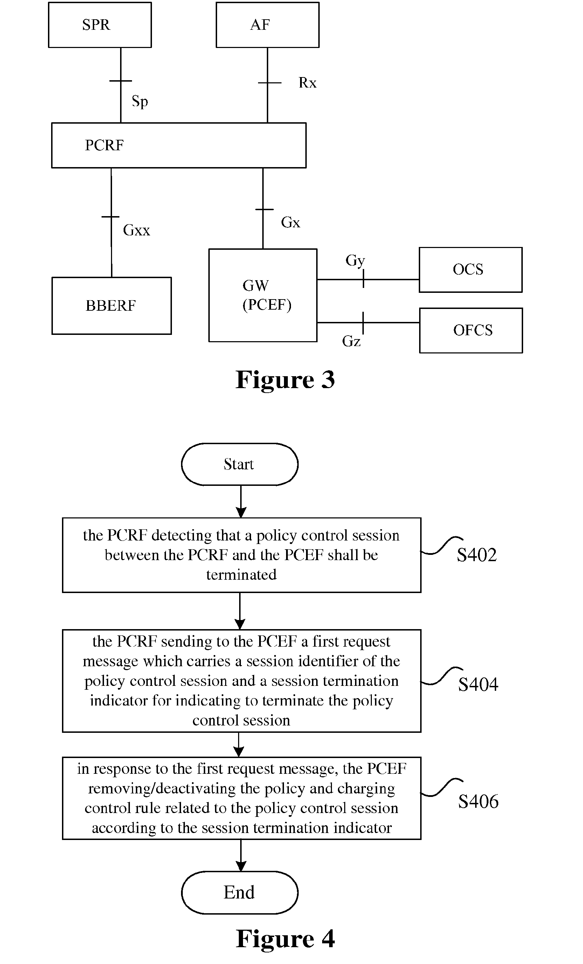

Fig.3 shows a PCC architecture of Release 8. The PCRF sends the QoS rule related to the IP-CAN session to a bearer binding and event reporting function (BBERF) entity through a Gxx interface, and sends the PCC rule related to the IP-CAN session to the PCEF through the Gx interface. The BBERF comprises: bearer binding, the verification of uplink bearer binding, and event reporting. The BBERF entity generally is located in the gateway, e.g. the serving gateway in the evolved packet system (EPS), the evolved packet data gateway (ePDG), and the non-3GPP access gateway for accessing the EPS system and so on. The BBERF entity has the predefined QoS rule which is unknown by the PCRF, and the QoS rule can be activated by the BBERF under certain circumstances, while the PCRF does not know about the activation. When it occurs that the UE switches or de-attaches or disconnects the service network, it is required that the PCRF initiates a session to terminate the gateway control of the source system. Therefore, a technical solution supporting the PCRF to initiate the session to terminate the gateway control is needed.

### Summary of the Invention

The present invention is proposed with consideration to the problem existed in related technology that the PCRF cannot initiate the termination session under certain circumstances. For this reason, the present invention aims at providing an improved solution for triggering a session termination to solve the above-mentioned problem.

A method for triggering a session termination is provided according to one aspect of the present invention.

The method for triggering a session termination according to an embodiment of the present invention comprises the steps as follows: a policy and charging rules function entity, PCRF, detecting that a policy control session between the PCRF and a policy and charging enforcement function entity, PCEF, shall be terminated; the PCRF sending to the PCEF a first request message which carries a session identifier of the policy control session and a session termination indicator for indicating to terminate the policy control session; in response to the first request message, the PCEF removing/deactivating a policy and charging control rule related to the policy control session according to the session termination indicator.

A method for triggering a session termination is provided according to another aspect of the present invention.

The method for triggering a session termination according to an embodiment of the present invention comprises: a policy and charging rules function entity, PCRF, detecting that a gateway control session between the PCRF and a bearer binding and event reporting function entity, BBERF, shall be terminated; the PCRF sending to the BBERF a request message which carries a session identifier of the gateway control session and a session termination indicator for indicating to terminate the gateway control session; in response to the request message, the BBERF removing/deactivating a quality of service, QoS, rule related to the gateway control session according to the session termination indicator.

A method for implementing a session termination is provided according to another aspect of the present invention.

The method for implementing a session termination according to an embodiment of the present invention comprises: a policy and charging rules function entity, PCRF, detecting that a policy control session between the PCRF and a policy and charging enforcement function entity, PCEF, shall be terminated, and sending to the PCEF a request message which carries a session identifier of the policy control session and a session termination indicator for indicating to terminate the policy control session; in response to the first request message, the PCEF removing/deactivating a policy and charging control rule related to the policy control session according to the session termination indicator, and sending a first confirmation message to the PCRF; the PCEF sending a second request message to the PCRF to indicate to terminate the policy control session; in response to the second request message, the PCRF identifying the application function session bound with the terminated policy control session, and sending a second confirmation message to the PCEF.

Wherein, the policy control session comprises an IP-CAN session.

Preferably, the operation of the PCEF removing/deactivating the policy and charging control rule related to the policy control session according to the session termination indicator specifically comprises: the PCEF reading the session termination indicator in the first request message, and judging which session needs to be terminated; the PCEF determining the policy control session need to be terminated according to the session indicator; the PCEF removing/deactivating the policy and charging control rule related to the policy control session.

Preferably, under the circumstance that the PCRF identified the application function session bound with the terminated policy control session, the method further comprises: the PCRF sending a third request message to the application function entity to indicate to terminate the identified application function session; the application function entity sending a third confirmation message to the PCRF to confirm that the application function session is terminated; the application function entity sending a fourth request message to the PCRF to indicate that the application function session has been terminated; the PCRF sending a fourth confirmation message to the application function entity to confirm that the application function session is terminated.

A method for implementing a session termination is provided according to another aspect of the present invention.

The method for implementing a session termination according to an embodiment of the present invention comprises: a policy and charging rules function entity, PCRF, detecting that a gateway control session between the PCRF and a bearer binding and event reporting function entity, BBERF, shall be terminated, and sending to the BBERF a first request message which carries a session identifier of the gateway control session and a session termination indicator for indicating to terminate the gateway control session; in response to the first request message, the BBERF removing/deactivating a quality of service, QoS, rule related to the gateway control session according to the session termination indicator, and sending a first confirmation message to the PCRF; the BBERF sending a second request message to the PCRF to indicate to terminate the gateway control session; the PCRF sending a second confirmation message to the BBERF.

Preferably, the operation of the BBERF removing/deactivating the QoS rule related to the gateway control session according to the session termination indicator specifically comprises: the BBERF reading the session termination indicator in the first request message, and judging which session need to be terminated; the BBERF determining the gateway control session which need to be terminated according to the session indicator; the BBERF removing/deactivating the QoS rule related to the gateway control session.

A session termination system is provided according to another aspect of the present invention.

The session termination system according to an embodiment of the present invention comprises: a policy and charging rules function entity, PCRF, a policy and charging enforcement function entity, PCEF, or a bearer binding and event reporting function entity, BBERF" the system further comprises: a termination indicator setting module, located in the PCRF and configured to set a termination indicator for indicating to terminate a session when the PCRF detects that a policy control session between the PCRF and the PCEF or a gateway control session between the PCRF and the BBERF need to be terminated; a first request message sending module, located in the PCRF and configured to send a first request message which carries the termination indicator to the PCEF or the BBERF; and a processing module, located in the PCEF and configured to remove/deactivate the policy and charging control rule related to the policy control session according to the first request message, or located in the BBERF and configured to remove/deactivate the QoS rule related to the gateway control session according to the first request message.

Through at least one of the above-mentioned technical solutions, in the present invention, the PCRF sends to the PCEF or the BBERF a request message which carries the session termination indicator. After receiving the request message, the PCEF or the BBERF removes/deactivates all the PCC or QoS rules related to the session. Compared with the prior art, the present invention can ensure the PCRF to initiate the session termination, so that the session can be terminated effectively

Other characteristics and advantages of the present invention will be described in the following specification, and will be apparent partly from the specification, or will be understood by implementing the embodiments of the present invention. The objects and other advantages can be realized and obtained through the structure of the specification, claims, and the structure indicated specially in the drawings.

### Brief Description of the Drawings

The drawings provide a further understanding of the present invention and constitute a part of the application. The drawings are used to explain the present invention together with the exemplary embodiments of the present invention, and they are not limitative of the present invention, and wherein:
Fig.1 is a block diagram of a PCC structure of the Release 7 according to related technology;
Fig.2 is a flow chart of a session termination flow initiated by the PCRF according to related technology;
Fig.3 is a block diagram of a PCC structure of the Release 8 according to related technology;
Fig.4 is a flow chart of a method for triggering a session termination according to the first method embodiment of the present invention;
Fig.5 is a flow chart of a method for triggering a session termination according to the second method embodiment of the present invention;
Fig.6 is a flow chart of a method for implementing a session termination according to the third method embodiment of the present invention;
Fig.7 is a flow chart of a preferable embodiment of the method shown in Fig.6;
Fig.8 is a flow chart of a method for implementing a session termination according to the fourth method embodiment of the present invention;
Fig.9 is a flow chart of a preferable embodiment of the method shown in Fig.8;
Fig.10 is a block diagram of the structure of the session termination system according to the system embodiment of the present invention.

### Detailed Description of the Embodiments

### Function Summary

As mentioned above, in current session termination flow, when initiating an IP-CAN session termination flow, the PCRF sends to a GW a Diameter RAR message which carries a related PCC rule identifier. However, if an IP-CAN session to be terminated has, in the PCEF, a PCC rule which is predefined by an activated PCEF itself and is unknown by the PCRF, it is obvious that the above-mentioned session termination flow cannot be realized. The session termination flow in the PCC architecture of Release 8 also has the similar problem. For this reason, in the technical solution provided by the embodiments of the present invention, when the PCRF determines to terminate an IP-CAN session or a gateway control session, the PCRF will send a request message which carries a session termination indicator to the PCEF or a BBERF; after receiving the message which carries the session termination indicator, the PCEF or the BBERF removes/deactivates all the PCC or QoS rules related to the IP-CAN session. Compare with the prior art, the present invention can ensure the PCRF to initiate the session termination, so that the session can be terminated effectively.

The present invention will be described in detail hereinafter in conjunction with the drawings. What needs to be explained is that if un-conflictive, the embodiments of the present invention can be inter-combined and the characteristics in the embodiments can be inter-combined either.

### The first method embodiment

In the first method embodiment, the present invention provides a method for triggering a session termination which is applied in the PCC architecture of the Release 7. Fig.4 is a flow chart of the method for triggering a session termination according to the first method embodiment of the present invention. As shown in Fig.4, the method comprises the following steps (step S402-step S406):
Step S402, the policy and charging rules function entity (PCRF) detects that a policy control session (e.g. IP-CAN session) between the PCRF and the policy and charging enforcement function entity (PCEF) shall be terminated
Step S404, the PCRF sends to the PCEF a request message which carries a session identifier of the policy control session and a session termination indicator for indicating to terminate the policy control session.
Step S406, in response to the request message, the PCEF removes/deactivates a policy and charging control rule related to the policy control session according to the session termination indicator, including removing the dynamic PCC rule and deactivating the predefined PCC rule.

Through the above-mentioned technical solution provided by the embodiment of the present invention, the problem in the prior art that the PCRF in the PCC architecture of the Release 7 cannot initiate the session termination is solved.

### The second method embodiment

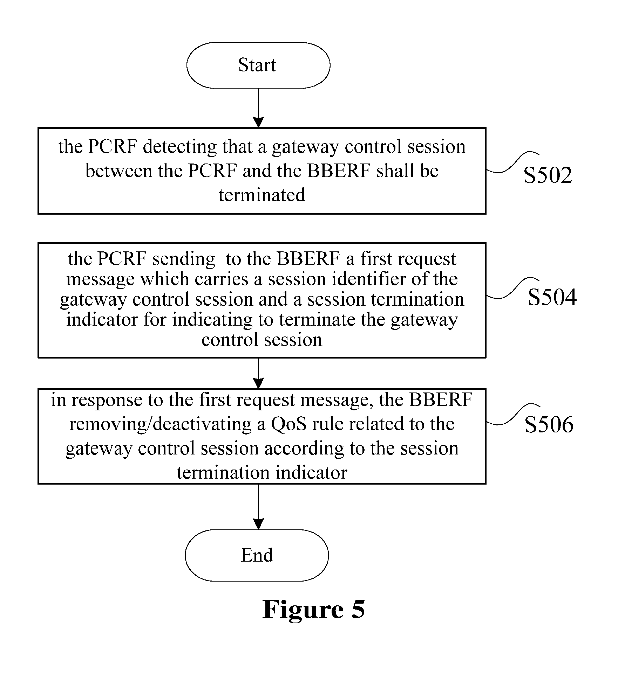

In the second method embodiment, the present invention provides another method for triggering a session termination which is applied in the PCC architecture of the Release 8. Fig.5 is a flow chart of the method for triggering the session termination according to the second method embodiment of the present invention. As shown in Fig.5, the method comprises the following steps (step S502-step S506):
Step S502, the policy and charging rules function entity (PCRF) detects that a gateway control session between the PCRF and the BBERF shall be terminated
Step S504, the PCRF sends to the BBERF a first request message which carries a session identifier of the gateway control session and a session termination indicator for indicating to terminate the gateway control session.
Step S506, in response to the request message, the BBERF removes/deactivates a QoS rule related to the gateway control session according to the session termination indicator, including removing the dynamic QoS rule and deactivating the predefined QoS rule.

Through the above-mentioned technical solution provided by the embodiment of the present invention, the problem in the prior art that the PCRF in the PCC architecture of the Release 8 cannot initiate the session termination is solved.

### The third method embodiment

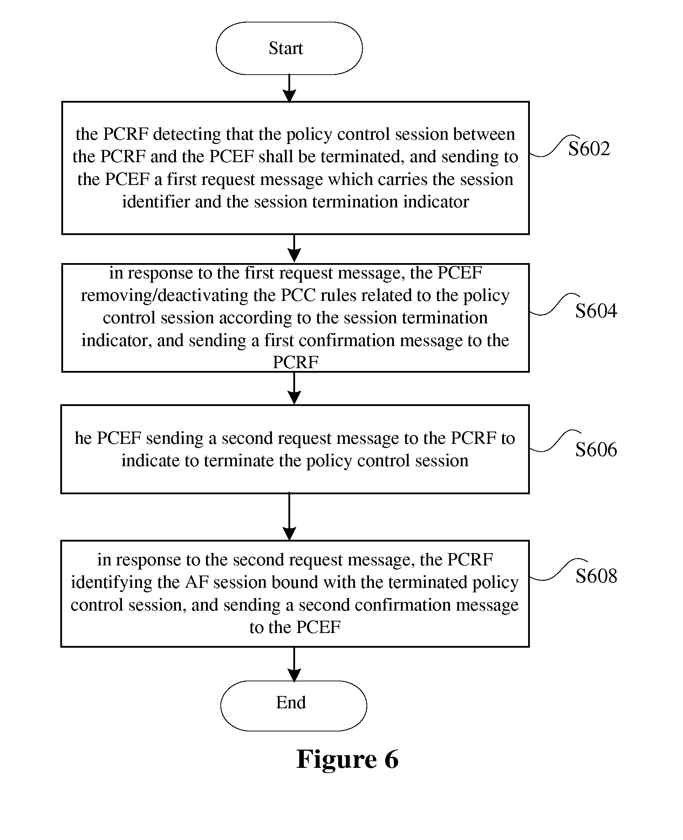

In the third method embodiment, the present invention provides a method for implementing the session termination which is applied in the PCC architecture of the Release 7. In the method, when the PCRF detects that the policy control session shall be terminated, the PCRF sends a request message which carries a session termination indicator to the PCEF to trigger the PCEF to delete/deactivate all the flows of the PCC rules related to the policy control session. Fig.6 is a flow chart of the method for implementing the session termination according to the third method embodiment of the present invention. As shown in Fig.6, the method comprises the following steps (step S602-step S608):
Step S602, the policy and charging rules function entity (PCRF) detects that the policy control session (e.g. IP session) between the PCRF and the policy and charging enforcement function entity (PCEF) shall be terminated, and sends to the PCEF a first request message which carries the session identifier of the policy control session and the session termination indicator for indicating to terminate the policy control session.
Step S604, in response to the first request message, the PCEF removes/deactivates the policy and charging control rule (PCC rule) related to the policy control session according to the session termination indicator, and sends a first confirmation message to the PCRF. In specific implementing process, the operation of the PCEF removes/deactivates the policy and charging control rule related to the policy control session according to the session termination indicator specifically comprises: the PCEF reads the session termination indicator in the first request message, and judges which session need to be terminated; the PCEF determines the policy control session need to be terminated according to the session indicator; the PCEF removes/deactivates the PCC rule related to the policy control session.
Step S606, the PCEF sends a second request message to the PCRF to indicate to terminate the policy control session.
Step S608, in response to the second request message, the PCRF identifies the application function session (AF session) bound with the terminated policy control session, and sends a second confirmation message to the PCEF.

Wherein, in step S608, if the PCRF identified the AF session bound with the terminated policy control session, the method further comprises: the PCRF sends a third request message to the AF entity to indicate to terminate the identified AF session; the AF entity sends a third confirmation message to the PCRF to confirm that the AF session is terminated; the AF entity sends a fourth request message to the PCRF to indicate that the AF session has been terminated; the PCRF sends a fourth confirmation message to the AF entity to confirm that the AF session is terminated.

Through the above-mentioned technical solution provided by the embodiment of the present invention, the problem in the prior art that the PCRF in the PCC architecture of the Release 7 cannot initiate the session termination and so as cannot effectively terminate the session is solved.

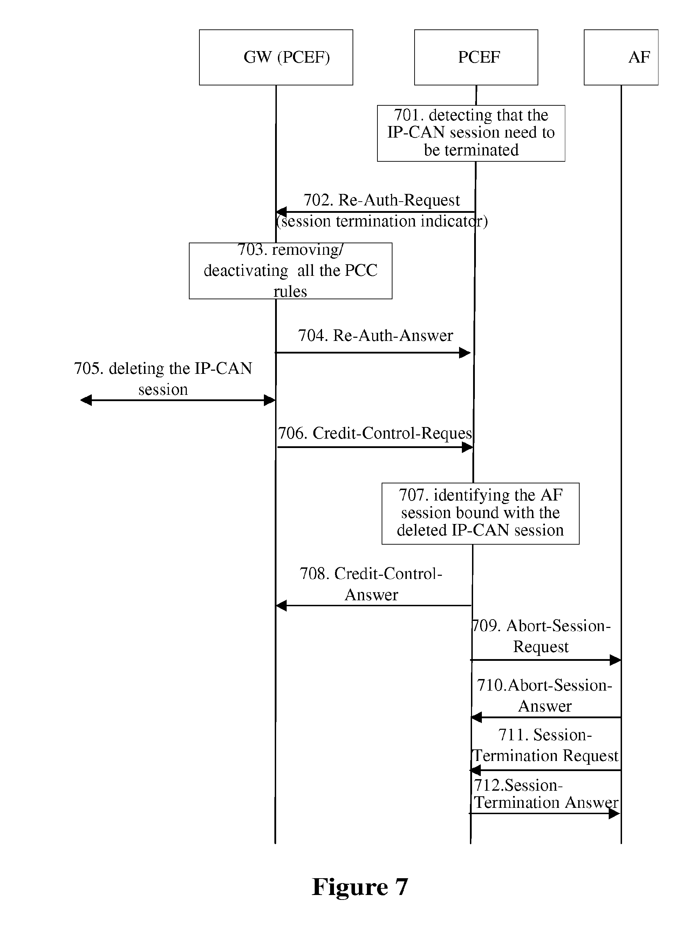

Fig.7 is a detailed processing flow chart of the method for implementing the session termination according to the preferable embodiment of the present invention. In Fig.7, the method is described by taking IP-CAN session as an example. As shown in Fig.7, the method comprises the following steps (step S701-step S712):
Step S701, the PCRF detects that an IP-CAN session needs to be terminated.
Step S702, the PCRF sends to the GW (the PCEF is generally located in the GW) a Diameter RAR request message (namely, the first request message mentioned above) which carries the session identifier and the session termination indicator of the IP-CAN session required to be terminated.
Step S703, the GW removes/deactivates all the PCC rules related to the IP-CAN session according to the session termination indicator.
Step S704, the GW sends a Diameter RAA message (namely, the first confirmation message mentioned above) to the PCRF for confirmation.
Step S705, when the GW does not have any PCC rules suitable for the IP-CAN session, the PCEF will use a specific flow to delete the IP-CAN session.
Step S706, the GW sends a Diameter CCR message (namely, the second request message mentioned above) to the PCRF to indicate to terminate the IP-CAN session. The value of the CC-Request-Type AVP (Attribute Value Pair) in the Diameter CCR message is set as TERMINATION_REQUEST which is used for identifying the termination of the session.
Step S707, the PCRF identifies the AF session bound with the deleted IP-CAN session.
Step S708, the PCRF sends a Diameter CCA message (namely, the second confirmation message as mentioned above) to the GW for confirmation.
Step S709, the PCRF sends a Diameter ASR message (namely, the third request message mentioned above) to the AF to indicate to terminate the session.
Step S710, the AF sends a Diameter ASA message (namely, the third confirmation message mentioned above) to the PCRF for confirmation.
Step S711, the AF sends a Diameter STR message (namely, the fourth request message mentioned above) to the PCRF to indicate that the session has been terminated
Step S712, the PCRF sends a Diameter STA message (namely, the fourth confirmation message mentioned above) to the AF for confirmation.

### The fourth method embodiment

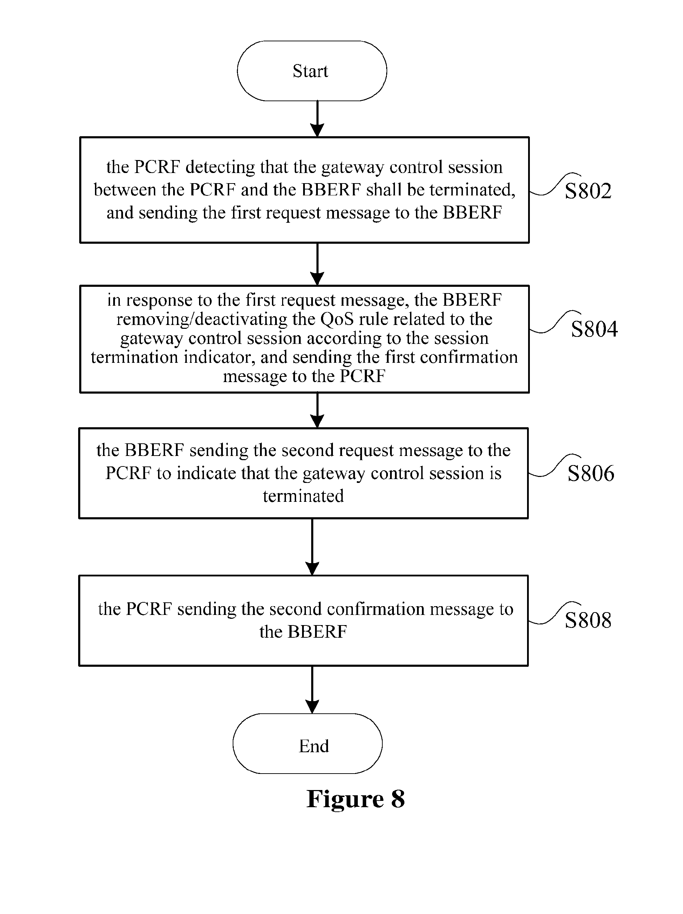

In the fourth method embodiment, the present invention provides a method for implementing the session termination which is applied in the PCC architecture of the Release 8. In the method, when the PCRF detects that the Gateway Control session shall be terminated, the PCRF sends a request message which carries the session termination indicator to the BBERF to trigger the BBERF to remove/deactivate all the flows of the QoS rule related to the IP-CAN session. Fig. 8 is a flow chart of the method for implementing the session termination according to the fourth method embodiment of the present invention. As shown in Fig.8, the method comprises the following steps (step S802-step S808):
Step S802, the policy and charging rules function entity (PCRF) detects that a gateway control session between the PCRF and the BBERF shall be terminated, and sends to the BBERF a first request message which carries the session identifier of the gateway control session and the session termination indicator for indicating to terminate the gateway control session.
Step S804, in response to the first request message, the BBERF removes/deactivates the QoS rule related to the gateway control session according to the session termination indicator, and sends the first confirmation message to the PCRF. Preferably, the operation of the BBERF removes/deactivates the QoS rule related to the gateway control session according to the session termination indicator specifically comprises: the BBERF reads the session termination indicator in the first request message, and judges which session need to be terminated; the BBERF determines the gateway control session which need to be terminated according to the session indicator; the BBERF removes/deactivates the QoS rule related to the gateway control session.
Step S806, the BBERF sends the second request message to the PCRF to indicate that the gateway control session is terminated.
Step S808, the PCRF sends the second confirmation message to the BBERF.

Through the above-mentioned technical solution provided by the embodiment of the present invention, the problem in the prior art that the PCRF in the PCC architecture of the Release 8 cannot initiate the session termination and so as cannot effectively terminate the session is solved.

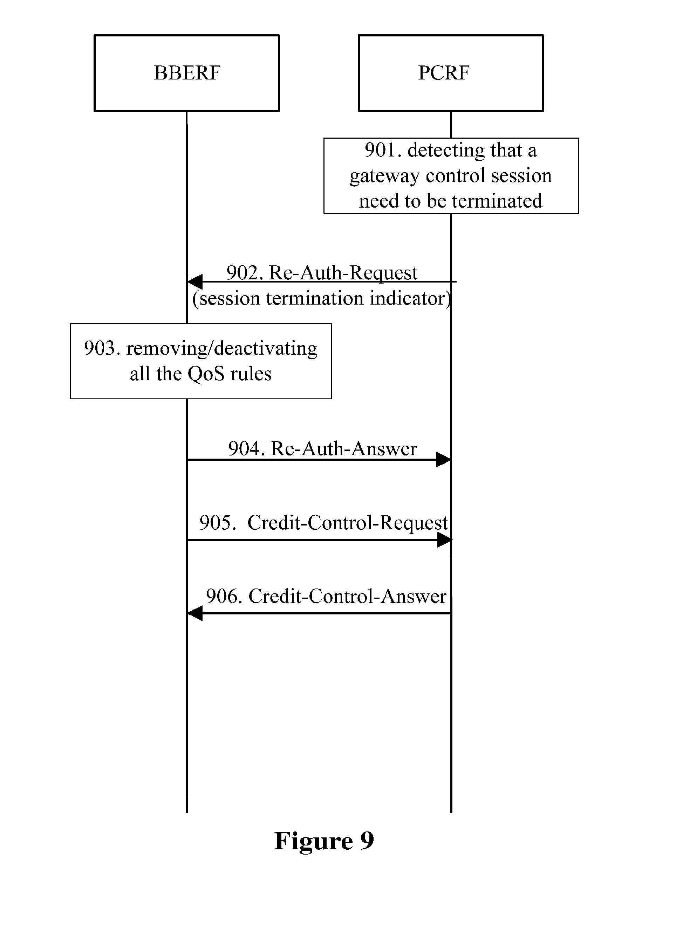

Fig.9 is a detailed processing flow chart of the method for implementing the session termination according to the preferable embodiment of the present invention. As shown in Fig.9, the method comprises the following steps (step S901-step S906):
Step S901, the PCRF detects that a gateway control session needs to be terminated.
Step S902, the PCRF sends to the BBERF a Diameter RAR request message (namely, the first request message mentioned above) which carries the session identifier and session termination indicator of the gateway control session required to be terminated
Step S903, the BBERF removes/deactivates all the QoS rules related to the IP-CAN session according to the session termination indicator;
Step S904, the BBERF sends the Diameter RAA message (namely, the first confirmation message mentioned above) to the PCRF for confirmation; on the other hand, if the BBERF does not have any QoS rules suitable for the UE, the BBERF will use a specific flow to delete the gateway control session.
Step S905, the BBERF sends a Diameter CCR message (namely, the second request message mentioned above) to the PCRF to indicate to terminate the gateway control session, wherein the value of the CC-Request-Type AVP (Attribute Value Pair) in the Diameter CCR message is set as TERMINATION_REQUEST which is used for identifying the termination of the session.
Step S906, the PCRF sends a Diameter CCA message (namely, the second confirmation message mentioned above) to the BBERF for confirmation.

### System embodiment

A session termination system which is applied in the PCC architecture of the Release 7 or in the PCC architecture of the Release 8 used for processing the session termination is provided according to the embodiment of the present invention. The session termination system is preferably used for realizing the methods provided by the above-mentioned method embodiments.

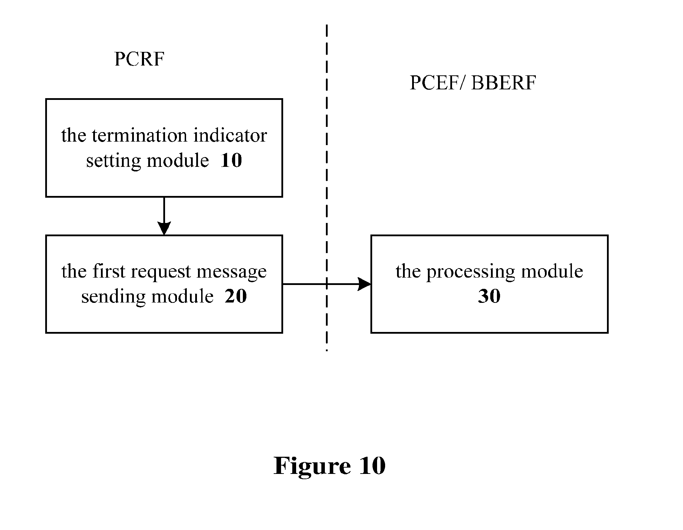

Fig.10 is a block diagram of the structure of the session termination system according to the system embodiment of the present invention. As shown in Fig.10, the system comprises: a policy and charging rules function entity (PCRF), a policy and charging enforcement function entity (PCEF) or a bearer binding and event reporting function entity (BBERF). Preferably, as shown in Fig.10, the system further comprises: a termination indicator setting module 10, a first request message sending module 20 and a processing module 30. Each module of the system will be described in detail hereafter:

The termination indicator setting module 10 is located in the PCRF and configured to set the termination indicator for indicating to terminate the session when the PCRF detects that the policy control session (e.g. IP-CAN session) between the PCRF and the PCEF or the gateway control session between the PCRF and the BBERF need to be terminated.

The first request message sending module 20 is located in the PCRF, and connected with the termination indicator setting module 10, and configured to send the first request message which carries the termination indicator to the PCEF or the BBERF.

The processing module 30 is located in the PCEF, and connected with the first request message sending module 20, and configured to remove/deactivate the PCC rule related to the policy control session according to the first request message, or is located in the BBERF and configured to delete/deactivate the QoS rule related to the gateway control session according to the first request message.

Specifically, the enforcement process of the termination indicator setting module 10, the first request message sending module 20 and the processing module 30 can be realized with reference to the methods provided by the above-mentioned method embodiments for those common skill in the art, so unnecessary description will not be given here anymore.

Through the session termination system provided by the embodiment of the present invention, the PCRF can initiate the session termination through setting the termination indicator setting module and the other related modules, and the session termination can be realized effectively.

Obviously, those skilled in the art shall understand that the above-mentioned modules and steps of the present invention can be realized with general computing devices, and can be integrated into one single computing device or distributed within a network consisting of a plurality of computing devices. Alternatively, the modules and the steps of the present invention can be realized with the executable program codes by the computing device, and thus these program codes can be stored in a storage device so as to be executed by the computing device, or the modules and the steps can be formed into integrated circuit module respectively, or a plurality of modules or steps can be formed into one single integrated circuit module so as to be realized. In this way, the present invention is not restricted to combination of any particular hardware and software.

The descriptions above are only preferable embodiments of the present invention, and do not intend to restrict the present invention. For those skilled in the art, the present invention may have various changes and variations. Any amendments, equivalent substitutions, improvements etc. within the spirit and principle of the present invention are all concluded in the scope of the protection of the present invention.

## Claims

1. A method for triggering a session termination, **characterized by**, comprising:
a policy and charging rules function entity, PCRF, detecting that a policy control session between the PCRF and a policy and charging enforcement function entity, PCEF, shall be terminated;
the PCRF sending to the PCEF a request message which carries a session identifier of the policy control session and a session termination indicator for indicating to terminate the policy control session;
in response to the request message, the PCEF removing/deactivating a policy and charging control rule related to the policy control session according to the session termination indicator.

2. A method for triggering a session termination, **characterized by**, comprising:
a policy and charging rules function entity, PCRF, detecting that a gateway control session between the PCRF and a bearer binding and event reporting function entity, BBERF, shall be terminated;
the PCRF sending to the BBERF a request message which carries a session identifier of the gateway control session and a session termination indicator for indicating to terminate the gateway control session;
in response to the request message, the BBERF removing/deactivating a quality of service, QoS, rule related to the gateway control session according to the session termination indicator.

3. A method for implementing a session termination, **characterized by**, comprising:
a policy and charging rules function entity, PCRF, detecting that a policy control session between the PCRF and a policy and charging enforcement function entity, PCEF, shall be terminated, and sending to the PCEF a first request message which carries a session identifier of the policy control session and a session termination indicator for indicating to terminate the policy control session;
in response to the first request message, the PCEF removing/deactivating a policy and charging control rule related to the policy control session according to the session termination indicator, and sending a first confirmation message to the PCRF;
the PCEF sending a second request message to the PCRF to indicate to terminate the policy control session;
in response to the second request message, the PCRF identifying the application function session bound with the terminated policy control session, and sending a second confirmation message to the PCEF.

4. The method according to Claim 3, **characterized in that** the policy control session comprises an IP connectivity access network, IP-CAN, session.

5. The method according to Claim 3, **characterized in that** the operation of the PCEF removing/deactivating the policy and charging control rule related to the policy control session according to the session termination indicator comprises:
the PCEF reading the session termination indicator in the first request message, and judging which session need to be terminated;
the PCEF determining the policy control session need to be terminated according to the session indicator;
the PCEF removing/deactivating the policy and charging control rule related to the policy control session.

6. The method according to Claim 3, **characterized in that** under the circumstance that the PCRF identified the application function session bound with the terminated policy control session, the method further comprises:
the PCRF sending a third request message to the application function entity to indicate to terminate the identified application function session;
the application function entity sending a third confirmation message to the PCRF to confirm that the application function session is terminated;
the application function entity sending a fourth request message to the PCRF to indicate that the application function session has been terminated;
the PCRF sending a fourth confirmation message to the application function entity to confirm that the application function session is terminated.

7. A method for implementing a session termination, **characterized by**, comprising:
a policy and charging rules function entity, PCRF, detecting that a gateway control session between the PCRF and a bearer binding and event reporting function entity, BBERF, shall be terminated, and sending to the BBERF a first request message which carries a session identifier of the gateway control session and a session termination indicator for indicating to terminate the gateway control session;
in response to the first request message, the BBERF removing/deactivating a quality of service, QoS, rule related to the gateway control session according to the session termination indicator, and sending a first confirmation message to the PCRF;
the BBERF sending a second request message to the PCRF to indicate to terminate the gateway control session;
the PCRF sending a second confirmation message to the BBERF.

8. The method according to Claim 7, **characterized in that** the operation of the BBERF removing/deactivating the QoS rule related to the gateway control session according to the session termination indicator comprises:
the BBERF reading the session termination indicator in the first request message, and judging which session need to be terminated;
the BBERF determining the gateway control session which need to be terminated according to the session indicator;
the BBERF removing/deactivating the QoS rule related to the gateway control session.

9. A session termination system, comprising: a policy and charging rules function entity, PCRF, a policy and charging enforcement function entity, PCEF or a bearer binding and event reporting function entity, BBERF, **characterized by**, further comprising:
a termination indicator setting module, located in the PCRF and configured to set a termination indicator for indicating to terminate a session when the PCRF detects that a policy control session between the PCRF and the PCEF or a gateway control session between the PCRF and the BBERF need to be terminated;
a first request message sending module, located in the PCRF and configured to send a first request message which carries the termination indicator to the PCEF or the BBERF; and
a processing module, located in the PCEF and configured to remove/deactivate the policy and charging control rule related to the policy control session according to the first request message, or located in the BBERF and configured to remove/deactivate the QoS rule related to the gateway control session according to the first request message.
